# EUROPÄISCHE PATENTANMELDUNG

(11) **EP 4 775 526 A1**
(43) Veröffentlichungstag der Anmeldung: **15.07.2026**
(21) Anmeldenummer: 25219687.8
(22) Anmeldetag: 01.12.2025
(51) Int. Cl.: B66F 9/06, B60W 60/00, B66F 9/075, B66F 9/24, G01C 21/00, G05B 19/418, G05D 1/229, G05D 1/667, G06N 20/00, G06V 10/778, G06V 20/56

(54) **FLURFÖRDERZEUG SOWIE VERFAHREN UND SYSTEM ZUM BETREIBEN EINES SOLCHEN FLURFÖRDERZEUGS IN EINEM WARENLAGER**

(30) Priorität: 27.12.2024 DE 102024139765; 12.02.2025 DE 102025105194
(71) Anmelder: STILL GmbH, 22113 Hamburg (DE)
(72) Erfinder: Hindemith, Lukas, 21244 Buchholz (DE); Howey, Ansgar, 22926 Ahrensburg (DE); Hinckeldeyn, Johannes, 22303 Hamburg (DE); Schüthe, Dennis, 21244 Buchholz (DE); König, Ralf, 21365 Adendorf (DE); Dierfeld, Sven, 20099 Hamburg (DE)
(74) Vertreter: Patentship Patentanwaltgesellschaft

(57) **Zusammenfassung**

Die Erfindung betrifft ein Flurförderzeug (120a,b) zum Transport von Warenobjekten (140) sowie ein Verfahren und System (100) zum Betreiben eines solchen Flurförderzeugs (120a,b), insbesondere in einem Warenlager. Das Flurförderzeug (120a,b) umfasst eine Antriebseinheit zum Bewegen des Flurförderzugs (120a,b) sowie eine oder mehrere Sensoreinheiten (130a), welche ausgebildet sind, eine Vielzahl von Sensordaten im Betrieb des Flurförderzeugs (120a,b) zu erfassen. Ferner umfasst das Flurförderzeug (120a,b) eine Steuereinheit, welche ausgebildet ist, in einem Anlernmodus, in dem das Flurförderzeug (120a,b) manuell betrieben wird, auf der Grundlage der Vielzahl von Sensordaten eine Vielzahl von Bewegungsabläufen (128a,b) des Flurförderzeugs (120a,b) zu bestimmen und auf der Grundlage der Vielzahl von Bewegungsabläufen (128a,b) des Flurförderzeugs (120a) ein auf Imitationslernen basierendes Machine Learning, ML, Modell, insbesondere neuronales Netzwerk, zu trainieren. Die Steuereinheit ist ferner ausgebildet ist, in einem Betriebsmodus des Flurförderzeugs (120a,b), mittels des trainierten auf Imitationslernen basierenden ML-Modells, insbesondere neuronalen Netzwerks, Steuerungsdaten für die Antriebseinheit zu erzeugen, um einen Bewegungsablauf des Flurförderzeugs (120a,b) zu steuern.

## Beschreibung

Die Erfindung betrifft ein Flurförderzeug sowie ein Verfahren und System zum Betreiben eines solchen Flurförderzeugs, insbesondere in einem Warenlager.

Für den Transport und die Lagerung von Produkten, Waren und Materialien werden oftmals Ladungsträger, beispielsweise Gitterboxen oder Paletten, insbesondere Europaletten, verwendet. Zur Handhabung derartiger Ladungsträger, z.B. in der Intralogistik, d.h. dem innerbetrieblichen Materialfluss, z.B. in einem Warenlager, werden in der Regel Flurförderzeuge, z.B. Gabelstapler, und dergleichen eingesetzt. Ein Warenlager ist in der Regel ein sehr dynamisches Umfeld, in dem die Steuerung der Flurförderzeuge in der Regel entweder manuell, teilautomatisiert oder vollautomatisiert, d.h. fahrerlos erfolgt und daher ein komplexes Problem mit vielen Facetten darstellt. Ein fahrerloses Flurförderzeug ist ein selbstfahrendes Fördermittel, welches automatisch gesteuert und ohne menschliche Berührung betrieben wird.

Fahrerlose Transportsysteme (FTS) spielen in der modernen Intralogistik eine immer bedeutendere Rolle. Das Einrichten eines FTS erfordert in der Regel eine Vielzahl von manuellen Schritten, um das Verhalten des FTS an eine jeweilige Anwendungsumgebung optimal anzupassen. Dazu gehört beispielsweise das Festlegen von Fahrwegen im Warenlager, auf denen sich das fahrerlose Flurförderzeug bewegen darf, um eine möglichst effiziente und sichere Beförderung der Waren zu gewährleisten. Auch das Parametrisieren der Steuerungssoftware für ein optimales Fahrverhalten und Lasthandhabung des fahrerlosen Flurförderzeugs gehören dazu. Hierbei müssen sowohl die zu transportierenden Waren als auch Umgebungsfaktoren des Warenlagers berücksichtigt werden, um eine reibungslose und sichere Abwicklung zu gewährleisten. Darüber hinaus müssen auch Aspekte wie die Einhaltung von Sicherheitsstandards und die Integration von Notfallmaßnahmen in das System berücksichtigt werden, um mögliche Risiken zu minimieren. Spezielle Anforderungen in Bezug auf Bereiche mit Begegnungen mit Fußgängern, z.B. Bereiche mit erhöhtem Risiko in denen langsamer gefahren werden muss, müssen ermittelt und händisch in das System integriert werden. Daher erfordert die Inbetriebnahme eines fahrerlosen Flurförderzeugs ein hohes Maß an manuellem Aufwand und Expertenwissen. Zudem erfordern Anpassungen an z. B. veränderte Gegebenheiten manuelle Anpassungstätigkeiten, die mit Aufwand und Kosten verbunden sind.

Einige fahrerlose Flurförderzeuge weisen bereits ein gewisses Maß an Autonomie auf und können Hindernissen ausweichen. Teilweise können dabei auch Menschen von anderen Objekten unterschieden werden. Das in diesen Fällen gewünschte Verhalten muss jedoch jeweils parametrisiert werden und ist in der Regel anwendungsspezifisch unterschiedlich und auch nicht auf die örtlichen Gegebenheiten in verschiedenen Bereichen des Einsatzortes abgestimmt.

Bei unterschiedlichen Anwendungen bzw. Einsatzorten von fahrerlosen Flurförderzeugen bestehen in der Regel individuelle Gegebenheiten in Bezug auf die gemeinsame Nutzung von Verkehrsräumen. Bei manchen Anwendungen bzw. Einsatzorten sind Verkehrsräume von fahrerlosen Flurförderzeugen und Fußgängern deutlich getrennt, bei anderen werden die gleichen Verkehrsräume genutzt. Innerhalb eines Einsatzortes gibt es häufig zudem auch noch unterschiedliche Gegebenheiten, wie z.B. schlecht einsehbare Bereiche oder Bereiche mit erhöhtem Aufkommen von Fußgängern sowie andere an denen kaum mit Fußgängern gerechnet werden muss bzw. wo diese von weitem sichtbar wären. Menschliche Fahrer wissen um solche Gegebenheiten und passen ihr Fahrverhalten darauf an. Beim Aufsetzen von FTS-Systemen muss dieses Domänenwissen aufwändig ermittelt und in der Anwendung mit hohem manuellem Aufwand parametrisiert werden, was oft nicht vollumfänglich geschieht.

Vor diesem Hintergrund liegt der vorliegenden Erfindung die Aufgabe zu Grunde, ein verbessertes Flurförderzeug sowie ein Verfahren und System zum Betreiben eines solchen Flurförderzeugs, insbesondere in einem Warenlager, bereitzustellen.

Diese Aufgabe wird gemäß einem ersten Aspekt der Erfindung durch ein nachstehend näher beschriebenes Flurförderzeug zum Transport von Warenobjekten, insbesondere in einem Warenlager, gelöst. Das Flurförderzeug gemäß dem ersten Aspekt umfasst eine Antriebseinheit zum Bewegen des Flurförderzugs sowie eine oder mehrere Sensoreinheiten, welche ausgebildet sind, eine Vielzahl von Sensordaten im Betrieb, d.h. bei der Bewegung des Flurförderzeugs zu erfassen. Ferner umfasst das Flurförderzeug gemäß dem ersten Aspekt eine Steuereinheit, welche ausgebildet ist, in einem Anlernmodus des Flurförderzeugs (hierin auch als Trainingsmodus bezeichnet), in dem das Flurförderzeug beispielsweise von einem Fahrer manuell betrieben wird, auf der Grundlage der Vielzahl von Sensordaten eine Vielzahl von Bewegungsabläufen des Flurförderzeugs zu bestimmen und auf der Grundlage der Vielzahl von Bewegungsabläufen des Flurförderzeugs ein auf Imitationslernen basierendes Machine Learning, ML, Modell, insbesondere neuronales Netzwerk, zu trainieren. Die Steuereinheit des Flurförderzeugs gemäß dem ersten Aspekt ist ferner ausgebildet, in einem Betriebsmodus des Flurförderzeugs (hierin auch als Anwendungsmodus des Flurförderzeugs bezeichnet), in dem das Flurförderzeug fahrerlos betrieben wird, mittels des trainierten auf Imitationslernen basierenden ML Modells, insbesondere neuronalen Netzwerks, Steuerungsdaten für die Antriebseinheit zu erzeugen, um einen Bewegungsablauf des Flurförderzeugs zu steuern.

Gemäß einer Ausführungsform definieren die Steuerungsdaten einen Bewegungsablauf, insbesondere eine Bewegungstrajektorie, des Flurförderzeugs gemäß dem ersten Aspekt.

In einer Ausführungsform umfasst das Flurförderzeug gemäß dem ersten Aspekt ferner ein bewegbares Lastaufnahmemittel, wobei die Steuerungsdaten einen Bewegungsablauf, insbesondere eine Bewegungstrajektorie, des bewegbaren Lastaufnahmemittels des Flurförderzeugs definieren.

Gemäß einer Ausführungsform umfasst das Flurförderzeug gemäß dem ersten Aspekt ferner eine Kommunikationsschnittstelle, welche ausgebildet ist, eine Vielzahl von weiteren Sensordaten zu empfangen, die im Betrieb des Flurförderzeugs von wenigstens einer externen Sensoreinheit erfasst worden sind, und wobei die Steuereinheit ausgebildet ist, in dem Anlernmodus bzw. Trainingsmodus des Flurförderzeugs, in dem das Flurförderzeug manuell betrieben wird, auf der Grundlage der Vielzahl von Sensordaten und der Vielzahl von weiteren Sensordaten die Vielzahl von Bewegungsabläufen des Flurförderzeugs zu bestimmen und auf der Grundlage der Vielzahl von Bewegungsabläufen des Flurförderzeugs das auf Imitationslernen basierende ML-Modell, insbesondere neuronale Netzwerk, zu trainieren.

In einer Ausführungsform umfasst die Vielzahl von weiteren Sensordaten: Bilddaten, Radardaten, Lidardaten, Positionsdaten, Orientierungsdaten, und/oder Bewegungsdaten.

Gemäß einer Ausführungsform ist die Kommunikationsschnittstelle ferner ausgebildet, von einem Warenmanagementsystem eine Vielzahl von Transportaufträgen zum Transport von Warenobjekten zu empfangen, wobei die Steuereinheit ausgebildet ist, in dem Anlernmodus bzw. Trainingsmodus des Flurförderzeugs, in dem das Flurförderzeug beispielsweise von einem Fahrer manuell betrieben wird, auf der Grundlage der Vielzahl von Bewegungsabläufen des Flurförderzeugs und der Vielzahl von Transportaufträgen das auf Imitationslernen basierende ML-Modell, insbesondere neuronale Netzwerk, zu trainieren.

In einer Ausführungsform umfassen die eine oder mehrere Sensoreinheiten zum Erfassen der Vielzahl von Sensordaten im Betrieb, d.h. bei der Bewegung des Flurförderzeugs einen Bildsensor, insbesondere eine Kamera, einen Radarsensor, einen Lidarsensor, einen Positionssensor, einen Orientierungssensor und/oder einen Bewegungssensor.

Gemäß einer Ausführungsform ist das Flurförderzeug als Gabelstapler ausgebildet.

Gemäß einem zweiten Aspekt wird ein System zum Betreiben einer Vielzahl von Flurförderzeugen bereitgestellt. Das System gemäß dem zweiten Aspekt umfasst eine Vielzahl von Flurförderzeugen gemäß dem ersten Aspekt der Erfindung und einen Server, welcher ausgebildet ist, ein Warenmanagementsystem zu implementieren, wobei das Warenmanagementsystem ausgebildet ist, eine Vielzahl von Transportaufträgen an die Vielzahl von Flurförderzeugen zu verteilen.

Gemäß einem dritten Aspekt wird ein Verfahren zum Betreiben eines Flurförderzeugs zum Transport von Warenobjekten, insbesondere in einem Warenlager, bereitgestellt. Das Verfahren gemäß dem dritten Aspekt umfasst:
Bewegen des Flurförderzeugs mittels einer Antriebseinheit des Flurförderzeugs;
Erfassen einer Vielzahl von Sensordaten mittels einer oder mehrerer Sensoreinheiten des Flurförderzeugs im Betrieb des Flurförderzeugs;
in einem Anlernmodus bzw. Trainingsmodus, in dem das Flurförderzeug manuell betrieben wird, Bestimmen einer Vielzahl von Bewegungsabläufen des Flurförderzeugs auf der Grundlage der Vielzahl von Sensordaten und Trainieren eines auf Imitationslernen basierenden Machine Learning, ML, Modells, insbesondere neuronalen Netzwerks, auf der Grundlage der Vielzahl von Bewegungsabläufen des Flurförderzeugs; und
in einem Betriebsmodus bzw. Anwendungsmodus des Flurförderzeugs, in dem das Flurförderzeug fahrerlos betrieben wird, Erzeugen von Steuerungsdaten für die Antriebseinheit mittels des trainierten auf Imitationslernen basierenden ML-Modells, insbesondere neuronalen Netzwerks, um einen Bewegungsablauf des Flurförderzeugs zu steuern.

Weitere Vorteile und Einzelheiten der Erfindung werden beispielhaft anhand der in den schematischen Figuren dargestellten Ausführungsbeispiele näher erläutert. Hierbei zeigt:
Figur 1 eine schematische Darstellung eines erfindungsgemäßen Systems mit einer Vielzahl von Flurförderzeugen gemäß einer Ausführungsform zum Transport von Warenobjekten insbesondere in einem Warenlager; und
Figur 2 eine schematische Darstellung eines Flurförderzeugs gemäß einer Ausführungsform zum Transport von Warenobjekten, insbesondere in einem Warenlager.

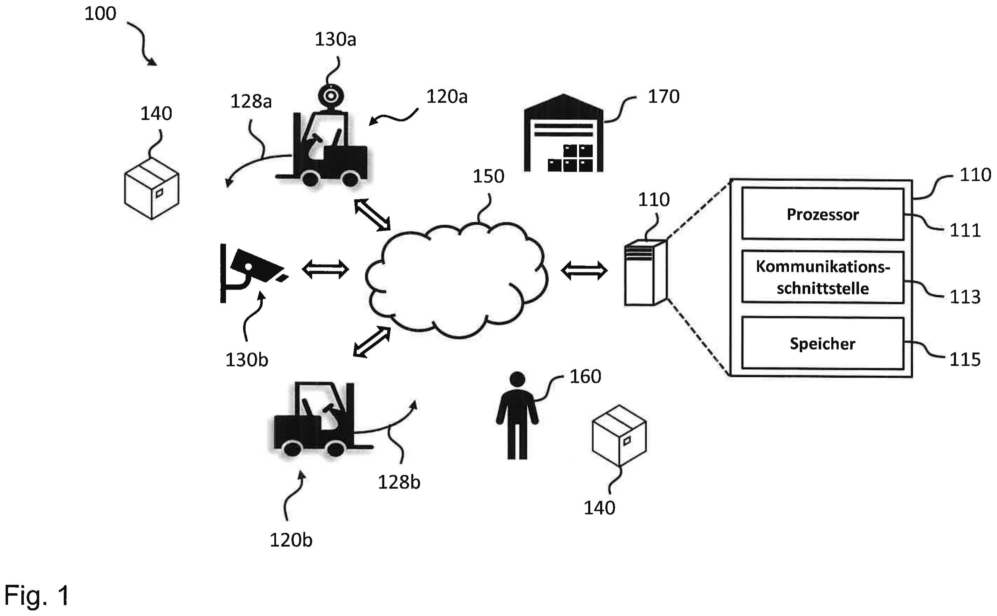

Figur 1 zeigt eine schematische Darstellung eines erfindungsgemäßen Systems 100 mit einer Vielzahl von erfindungsgemäßen Flurförderzeugen 120a,b, insbesondere Gabelstaplern 120a,b, und einem Server 110, insbesondere einem Edge-Cloud-Server 110, zum Verwalten der Vielzahl von erfindungsgemäßen Flurförderzeugen 120a,b. Wie in der Figur 1 dargestellt, kann der Server 110 einen Prozessor 111, eine Kommunikationsschnittstelle 113 und einen, insbesondere nichtflüchtigen, Speicher 115 umfassen. Der Speicher 115 kann ausgebildet sein, Daten und ausführbaren Programmcode zu speichern, der, wenn von dem Prozessor 111 des Servers 110 ausgeführt, den Prozessor 111 veranlasst, die im Folgenden beschriebenen Funktionen, Operationen und Verfahren durchzuführen. In einer Ausführungsform ist die Kommunikationsschnittstelle 113 des Servers 110 ausgebildet, drahtlos und/oder leitungsgebunden mit den Flurförderzeugen 120a,b und externen Sensoreinheiten 130b zu kommunizieren. Beispielsweise kann die Kommunikationsschnittstelle 113 des Servers 110 ausgebildet sein, über ein Kommunikationsnetzwerk, z.B. ein WLAN, 5G-Netzwerk, 6G-Netzwerk und/oder das Internet 150 mit den Flurförderzeugen 120a,b und externen Sensoreinheiten 130 zu kommunizieren, um Daten auszutauschen.

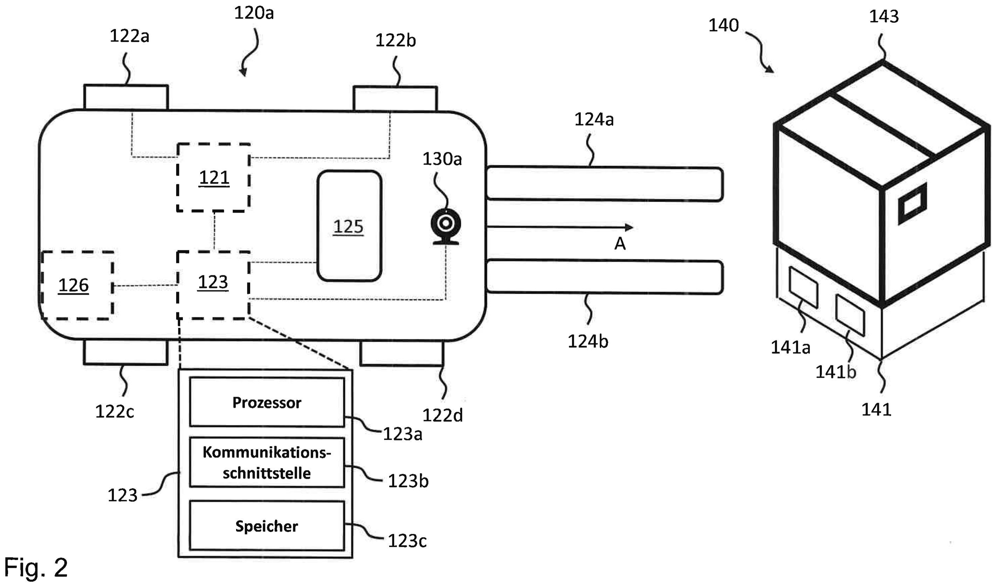

Figur 2 zeigt eine schematische Darstellung eines erfindungsgemäßen Flurförderzeugs 120a zum Transportieren von Warenobjekten 140 in einem industriellen Umfeld, insbesondere einem Warenlager, in dem neben den Warenobjekten 140 Fußgänger 160 (siehe Figur 1) unterwegs sein können und das Flurförderzeug 120a mit Infrastruktur 170 (siehe Figur 1), beispielsweise Regalen 170, interagieren kann. Bei dem Flurförderzeug 120a kann es sich insbesondere um einen zeitweise autonom, d.h. fahrerlos, teil-autonom und/oder manuell betreibbaren, d.h. von einem Fahrer geführten Gabelstapler 120a handeln. Bei den Warenobjekten 140 kann es sich beispielsweise um Waren 143, wie Verpackungskartons 143, handeln, welche auf einem jeweiligen Ladungsträger 141 angeordnet sind. Bei dem Ladungsträger 141 kann es sich beispielsweise um eine Palette 141, insbesondere eine Euro-Palette 141, oder eine Gitterbox 141 handeln.

Wie in Figur 2 dargestellt, kann das Flurförderzeug 120a ein Lastaufnahmemittel in Form eines Paares von Lastgabeln 124a,b umfassen, welche ausgebildet sind, in jeweilige Aussparungen, insbesondere Taschen 141a,b an einer Stirnseite des Ladungsträgers 141 eingebracht zu werden, um den Ladungsträger 141 sowie die darauf angeordnete Ware 143 aufzunehmen. Gemäß weiteren Ausführungsformen kann das Lastaufnahmemittel auch als Dorn beispielsweise für die Aufnahme von Folienrollen oder Drahtcoils, als unterhakendes Lastaufnahmemittel (z. B. vergleichbar mit Müllfahrzeugen zur Aufnahme der Mülltonnen), oder als Ballen- und Rollenklammern beispielsweise zur Aufnahme von Papierrollen ausgebildet sein.

Das in Figur 2 dargestellte Flurförderzeug 120a umfasst ferner eine Antriebseinheit 121, beispielsweise wenigstens einen Motor 121, insbesondere einen batteriebetriebenen Elektromotor 121, wobei die Antriebseinheit 121 ausgebildet ist, das Flurförderzeug 120a und das Paar von Lastgabeln 124a,b relativ zu dem Warenobjekt 140 zu bewegen, um beispielsweise die Orientierung und/oder den Abstand zwischen dem Flurförderzeug 120a und dem Warenobjekt 140, insbesondere dem Ladungsträger 141 zu ändern und/oder das Paar von Lastgabeln 124a,b anzuheben oder abzusenken. Zu diesem Zweck kann, wie in Figur 2 angedeutet, die Antriebseinheit 121 geeignet mit Rädern 122a-d und/oder dem Paar von Lastgabeln 124a,b des Flurförderzeugs 120a verbunden sein. Das Flurförderzeug 120a kann ferner ein Anzeige- und/oder Bedienfeld 125 zur Anzeige von Informationen und/oder zum Bedienen des Flurförderzeugs 120a umfassen.

Das Flurförderzeug 120a umfasst ferner eine oder mehrere Sensoreinheiten 130a zur Erfassung einer Vielzahl von Sensordaten, welche Informationen über die aktuelle Umgebung und Bewegungsabläufe des Flurförderzeugs 120a enthalten. In einer Ausführungsform können die Sensoreinheiten 130a zum Erfassen der Vielzahl von Sensordaten einen Bildsensor, insbesondere eine Kamera, einen Radarsensor, einen Lidarsensor, einen Positionssensor, einen Orientierungssensor und/oder einen Bewegungssensor umfassen. Wie in Figur 2 angedeutet, kann die Sensoreinheit 130a beispielsweise in Form einer Bilderfassungseinheit 130a vorzugsweise derart an dem Flurförderzeug 120a montiert sein, dass ein Blickfeld 131a der Bilderfassungseinheit 130a im Wesentlichen entlang einer Vorwärtsbewegungsrichtung A des Flurförderzeugs 120a liegt. Vorzugsweise kann die Bilderfassungseinheit 130a in der Symmetrieebene zwischen den zwei Lastgabeln 124a,b montiert sein. Neben der Bilderfassungseinheit 130a mit dem Blickfeld entlang der Vorwärtsbewegungsrichtung A des Flurförderzeugs 120a kann das Flurförderzeug 120a noch weitere Sensoreinheiten umfassen, beispielsweise eine Sensoreinheit mit einem Blickfeld entlang einer Rückwärtsbewegungsrichtung des Flurförderzeugs 120a und/oder eine Sensoreinheit mit einem Blickfeld senkrecht zu der Vorwärtsbewegungsrichtung A des Flurförderzeugs 120a.

Erfindungsgemäß umfasst das Flurförderzeug 120a ferner eine Steuereinheit 123, welche beispielsweise einen oder mehrere Prozessoren oder Mikro-Controller mit geeigneter Software umfassen kann und ausgebildet ist, das Flurförderzeug 120a zumindest teilweise automatisiert, d.h. fahrerlos zu steuern. Wie in der Figur 2 dargestellt, kann die Datenverarbeitungsvorrichtung bzw. Steuereinheit 123 ferner eine Kommunikationsschnittstelle 123b sowie einen, insbesondere nichtflüchtigen, Speicher 123c aufweisen. Der Speicher 123c kann ausgebildet sein, Daten und ausführbaren Programmcode zu speichern, der, wenn von dem Prozessor 123a der Datenverarbeitungsvorrichtung bzw. Steuereinheit 123 ausgeführt, den Prozessor 123a veranlasst, die im Folgenden beschriebenen Funktionen, Operationen und Verfahren durchzuführen.

Die Steuereinheit 123 des Flurförderzeugs 120a ist ausgebildet, in einem Anlernmodus bzw. Trainingsmodus des Flurförderzeugs 120a, in dem das Flurförderzeug 120a beispielsweise von einem Fahrer manuell betrieben wird, auf der Grundlage der Vielzahl von Sensordaten eine Vielzahl von Bewegungsabläufen 128a,b des Flurförderzeugs 120a zu bestimmen und auf der Grundlage der Vielzahl von Bewegungsabläufen 128a,b des Flurförderzeugs 120a ein auf Imitationslernen basierendes Machine Learning (Maschinelles Lernen; ML) Modell, insbesondere neuronales Netzwerk, zu trainieren. Mit anderen Worten: die Steuereinheit 123 des Flurförderzeugs 120a implementiert ein ML-Modell, insbesondere neuronales Netzwerk, welches mit den auf der Grundlage der Sensordaten bestimmten Bewegungsabläufen 128a,b mittels Imitationslernen trainiert wird.

Die Steuereinheit 123 des Flurförderzeugs 120a ist ferner ausgebildet, in einem Betriebsmodus bzw. Anwendungsmodus des Flurförderzeugs 120a, in dem das Flurförderzeug 120a fahrerlos betrieben wird, mittels des trainierten auf Imitationslernen basierenden ML-Modells, insbesondere neuronalen Netzwerks, Steuerungsdaten für die Antriebseinheit 121 zu erzeugen, um einen Bewegungsablauf des Flurförderzeugs zu steuern.

Weitere Details zum Imitationslernen werden in Schaal, Stefan. "Learning from demonstration." Advances in neural information processing systems 9 (1996) beschrieben, worauf hiermit vollumfänglich Bezug genommen wird. Das Imitationslernen ist ein Verfahren, bei dem Daten verwendet werden, die von menschlichen Experten generiert werden, um z.B. Robotern, wie dem fahrerlosen Flurförderzeug 120a neue Fähigkeiten beizubringen. Dabei führt der Experte die zu erlernende Tätigkeit vor, die dann aufgezeichnet wird. Anschließend wird ein entsprechendes Modell trainiert, das diese Expertendaten nutzt. Das fahrerlose Flurförderzeug 120a kann dann im Anwendungsmodus die vorgeführten Tätigkeiten auf Basis des gelernten Modells imitieren. Wichtig dabei ist zu bemerken, dass das gelernte Modell nicht einfach nur gezeigte Bewegungen wiederholt. Vielmehr wird der generelle Ablauf beim Lösen eines Problems erlernt und dann auf ein neues, bisher so noch nicht gesehenes Problem angewandt und so die Problemlösung generalisiert. So kann beispielsweise eine Palette 141 nicht nur an einem bestimmten, genau definierten Ort vom Fußboden durch das Flurförderzeug 120a aufgenommen, sondern eine Palette 141 kann unabhängig von ihrem genauen Ort vom Fußboden durch das erfindungsgemäße Flurförderzeug 120a aufgenommen werden.

In einer Ausführungsform kann ein menschlicher Fahrer das mit den Sensoreinheiten 130a ausgerüstete Flurförderzeug 120a im Trainingsmodus nutzen, um seine Aufgaben im Warenlager zu erledigen. Dabei können das Fahrverhalten sowie die Umgebungswahrnehmung aufgezeichnet werden und diese Sensordaten können verwendet werden, um das auf Imitationslernen basierende ML-Modell zu trainieren. Dies könnte zum Beispiel für die automatisierte Aufnahme von Ladungsträgern 141 realisiert werden. Dabei kann zur Datenaufnahme beispielsweise eine Kamera 130a und ein Lokalisierungssystem 130a auf dem Flurförderzeug 120a ausgebildet sein. Während das von dem Fahrer manuell gesteuerte Flurförderzeug 120a einen Ladungsträger 141 aufnimmt, werden die Lokalisierung, der Kamera-Stream und die Fahrbefehle des Fahrers aufgezeichnet, welche die Vielzahl von Sensordaten darstellen. Nachdem ein Datensatz von mehreren Ladungsaufnahmefahrten erstellt worden ist, wird das auf Imitationslernen basierende ML-Modell trainiert. Gemäß einer Ausführungsform kann hierzu ein auf "Behavioral Cloning" basierender Ansatz verwendet werden, wie beispielsweise in Torabi, Faraz, Garrett Warnell, and Peter Stone. "Behavioral cloning from observation." arXiv preprint arXiv:1805.01954 (2018) beschrieben, worauf hiermit vollumfänglich Bezug genommen wird. Wie bereits vorstehend beschrieben, wird das auf Imitationslernen basierende ML-Modell nach dem Training, d.h. im Anwendungsmodus dazu eingesetzt werden, um mit dem erfindungsgemäßen Flurförderzeug automatisiert Ladungsträger 141 aufzunehmen. Dabei können der aktuell erfasste Kamera-Stream und die Lokalisierung als Input in das ML-Modell eingegeben werden, welches entsprechende Steuerungsdaten, d.h. Fahrbefehle erzeugt, welche von der Antriebseinheit umgesetzt werden, um das Flurförderzeug 120a und/oder die Lastaufnahmemittel 124a,b entsprechend zu bewegen.

Gemäß einer Ausführungsform kann das auf Imitationslernen basierende ML-Modell auf den folgenden Daten basieren: Fahrparameter wie Geschwindigkeit, Lenkwinkel, Beschleunigungs- und Abbremsverhalten, die von Faktoren wie Wegeverlauf, Verkehrssituation und der transportierten Ladung abhängen können; Bewegungen des Lastaufnahmemittels 124a,b, die der Fahrer ausführt; Art der Ware (Information z.B. aus Warenmanagementsystem); Fahrspurinformationen wie minimale und maximale Kurvenradien; Fahrzeugbewegungsdaten aus z. B. Fahrantriebsdaten, Eingabeinformationen von einem Fahrer, beispielsweise Istwerte von fahrerbetätigten Bedienelementen (also von einem Fahrer vorgegebene Bewegungsbefehle des Flurförderzeugs), weiterer Fahrzeugsensoren (z. B. dynamischer Sensoren, wie Trägheitsmesseinrichtungen), Kraft-/Drucksensoren; fahrzeugexterne Sensoreinheiten 130b, wie z. B. externe Kameras, Scanner; Verwaltungsdaten aus z. B. prozessführenden Systemen wie TMS und ERP; metrische sowie semantische Karten der freien bzw. belegten Bereiche in der aktuellen Umgebung des Flurförderzeugs 120a,

Wie der Fachmann erkennt, kann durch die Nutzung der Erfahrung von Experten mittels des auf Imitationslernen basierenden ML-Modells implizites Expertenwissen für die Steuerung des erfindungsgemäßen Flurförderzeugs 120a nutzbar gemacht werden, um beispielsweise die Bewegungsabläufe, d.h. das Fahrverhalten des erfindungsgemäßen Flurförderzeugs 120a im Umfeld von Fußgängern in einem Warenlager zu verbessern. So kann das erfindungsgemäße Flurförderzeug 120a bereits vor der Inbetriebnahme generelle Problemlösungsfähigkeiten erlernen, welche das erfindungsgemäße Flurförderzeug 120a im fahrerlosen Betrieb beispielsweise für ein flexibles Verhalten bei Begegnungen mit Fußgängern in der gewünschten Umgebung verwenden kann, ohne dass eine manuelle Parametrisierung und Einstellung erforderlich ist. Zusätzlich kann das gelernte Wissen mittels Transferlernen auf andere Flurförderfahrzeuge eines gleichen Typs oder eines artverwandten Typs übertragen werden, um die Inbetriebnahme noch schneller abzuwickeln, da es ausreichend sein kann, nur ein Flurförderzeug einzulernen.

Die hierin beschriebenen Ausführungsformen weisen unter anderem die folgenden Vorteile auf: schnellere Inbetriebnahme neuer Flurförderzeuge; geringere Kosten für die Inbetriebnahme, da Flurförderzeug selbstständig in Betrieb genommen werden kann; bessere Individualisierung des Fahrverhaltens des Flurförderzeugs, welches genau auf die spezifische Situation des Anwendungsfalls vor Ort abgestimmt werden kann; verbessertes und auf die anwendungsspezifischen Besonderheiten angepasstes Verhalten bei Begegnungen mit Fußgängern; Verbesserung der Akzeptanz von fahrerlosen Flurförderzeugen bei manuellen Verkehrsteilnehmern durch bessere Integration in bestehende Prozesse und an Verkehrssituationen angepasstes Verhalten.

## Patentansprüche

1. Flurförderzeug (120a,b) zum Transport von Warenobjekten (140), insbesondere in einem Warenlager, wobei das Flurförderzeug (120a,b) umfasst:
eine Antriebseinheit (121) zum Bewegen des Flurförderzugs (120a,b);
eine oder mehrere Sensoreinheiten (130a), welche ausgebildet sind, eine Vielzahl von Sensordaten im Betrieb des Flurförderzeugs (120a,b) zu erfassen; und
eine Steuereinheit (123), welche ausgebildet ist, in einem Anlernmodus, in dem das Flurförderzeug (120a,b) manuell betrieben wird, auf der Grundlage der Vielzahl von Sensordaten eine Vielzahl von Bewegungsabläufen (128a,b) des Flurförderzeugs (120a,b) zu bestimmen und auf der Grundlage der Vielzahl von Bewegungsabläufen (128a,b) des Flurförderzeugs (120a) ein auf Imitationslernen basierendes Machine Learning, ML, Modells, insbesondere neuronales Netzwerk, zu trainieren;
wobei die Steuereinheit (123) ferner ausgebildet ist, in einem Betriebsmodus mittels des auf Imitationslernen basierenden ML-Modells, insbesondere neuronalen Netzwerks, Steuerungsdaten für die Antriebseinheit (121) zu erzeugen, um einen Bewegungsablauf des Flurförderzeugs (120a,b) zu steuern.

2. Flurförderzeug (120a,b) nach Anspruch 1, wobei die Steuerungsdaten einen Bewegungsablauf, insbesondere eine Bewegungstrajektorie, des Flurförderzeugs (120a,b) definieren.

3. Flurförderzeug (120a,b) nach Anspruch 1 oder 2, wobei das Flurförderzeug ferner ein bewegbares Lastaufnahmemittel (124a,b) umfasst und wobei die Steuerungsdaten einen Bewegungsablauf, insbesondere eine Bewegungstrajektorie, des bewegbaren Lastaufnahmemittels (124a,b) des Flurförderzeugs (120a,b) definieren.

4. Flurförderzeug (120a,b) nach einem der vorhergehenden Ansprüche, wobei das Flurförderzeug (120a,b) ferner eine Kommunikationsschnittstelle (126) umfasst, welche ausgebildet ist, eine Vielzahl von weiteren Sensordaten zu empfangen, die im Betrieb des Flurförderzeugs (120a,b) von wenigstens einer externen Sensoreinheit (130b) erfasst worden sind, und wobei die Steuereinheit (123) ausgebildet ist, in dem Anlernmodus, in dem das Flurförderzeug (120a,b) manuell betrieben wird, auf der Grundlage der Vielzahl von Sensordaten und der Vielzahl von weiteren Sensordaten die Vielzahl von Bewegungsabläufen (128a,b) des Flurförderzeugs (120a,b) zu bestimmen und auf der Grundlage der Vielzahl von Bewegungsabläufen (128a,b) des Flurförderzeugs (120a) das auf Imitationslernen basierende ML-Modell, insbesondere neuronale Netzwerk, zu trainieren.

5. Flurförderzeug (120a,b) nach Anspruch 4, wobei die Vielzahl von weiteren Sensordaten umfassen: Bilddaten, Radardaten, Lidardaten, Positionsdaten, Orientierungsdaten, und/oder Bewegungsdaten.

6. Flurförderzeug (120a,b) nach Anspruch 4 oder 5, wobei die
Kommunikationsschnittstelle (126) ferner ausgebildet, von einem Warenmanagementsystem eine Vielzahl von Transportaufträgen zu empfangen, und wobei die Steuereinheit (123) ausgebildet ist, in dem Anlernmodus, in dem das Flurförderzeug (120a,b) manuell betrieben wird, auf der Grundlage der Vielzahl von Bewegungsabläufen (128a,b) des Flurförderzeugs (120a) und der Vielzahl von Transportaufträgen das auf Imitationslernen basierende ML-Modell, insbesondere neuronale Netzwerk, zu trainieren.

7. Flurförderzeug (120a,b) nach einem der vorhergehenden Ansprüche, wobei die eine oder mehrere Sensoreinheiten (130a) zum Erfassen der Vielzahl von Sensordaten einen Bildsensor, insbesondere eine Kamera, einen Radarsensor, einen Lidarsensor, einen Positionssensor, einen Orientierungssensor und/oder einen Bewegungssensor umfassen.

8. Flurförderzeug (120a,b) nach einem der vorhergehenden Ansprüche, wobei das Flurförderzeug als Gabelstapler (120a,b) ausgebildet ist.

9. System (100) zum Betreiben einer Vielzahl von Flurförderzeugen (120a,b), wobei das System (100) umfasst:
eine Vielzahl von Flurförderzeugen (120a,b) nach einem der vorhergehenden Ansprüche; und
einen Server (110), welcher ausgebildet ist, ein Warenmanagementsystem zu implementieren, wobei das Warenmanagementsystem ausgebildet ist, eine Vielzahl von Transportaufträgen an die Vielzahl von Flurförderzeugen (120a,b) zu verteilen.

10. Verfahren zum Betreiben eines Flurförderzeugs (120a,b) zum Transport von Warenobjekten (140), insbesondere in einem Warenlager, wobei das Flurförderzeug (120a,b) umfasst:
Bewegen des Flurförderzeugs (120a,b) mittels einer Antriebseinheit (121) des Flurförderzeugs (120a,b);
Erfassen einer Vielzahl von Sensordaten mittels einer oder mehrerer Sensoreinheiten (130a) des Flurförderzeugs (120a,b) im Betrieb des Flurförderzeugs (120a,b);
in einem Anlernmodus, in dem das Flurförderzeug (120a,b) manuell betrieben wird, Bestimmen einer Vielzahl von Bewegungsabläufen (128a,b) des Flurförderzeugs (120a,b) auf der Grundlage der Vielzahl von Sensordaten und Trainieren eines auf Imitationslernen basierenden Machine Learning, ML, Modells, insbesondere neuronalen Netzwerks, auf der Grundlage der Vielzahl von Bewegungsabläufen (128a,b) des Flurförderzeugs (120a); und
in einem Betriebsmodus des Flurförderzeugs (120a,b), Erzeugen von Steuerungsdaten für die Antriebseinheit (121) mittels des auf Imitationslernen basierenden ML-Modells, insbesondere neuronalen Netzwerks, um einen Bewegungsablauf des Flurförderzeugs (120a,b) zu steuern.
